# EUROPÄISCHE PATENTSCHRIFT

(11) **EP 3 044 451 B1**
(45) Veröffentlichungstag und Bekanntmachung des Hinweises auf die Patenterteilung: **04.04.2018**
(21) Anmeldenummer: 14759234.9
(22) Anmeldetag: 08.09.2014
(51) Int. Cl.: F02M 35/02, F02M 35/10, F02M 35/024, G01F 15/12

(54) **LUFTFILTER**
AIRFILTER
FILTRE À AIR

(30) Priorität: 11.09.2013 DE 102013218217
(43) Veröffentlichungstag der Anmeldung: 20.07.2016
(73) Patentinhaber: Mahle International GmbH, 70376 Stuttgart (DE)
(72) Erfinder: AYDIN, Muecahit, 70499 Stuttgart (DE); BRILKE, Mathias, 71263 Weil der Stadt (DE); KOHLER, Samuel, 71093 Weil im Schönbuch (DE); LETTERER, Sven, 70435 Stuttgart (DE)
(74) Vertreter: BRP Renaud & Partner mbB Rechtsanwälte Patentanwälte Steuerberater
(86) Internationale Anmeldenummer: PCT/EP2014/069095
(87) Internationale Veröffentlichungsnummer: WO 2015/036367

(56) Entgegenhaltungen:
- DE-A1- 10 230 430
- DE-A1- 19 650 806
- DE-U1-202008 010 058
- JP-A- 2001 289 132
- US-A1- 2011 219 768

## Beschreibung

Die Erfindung betrifft ein Filtermodul für eine Verbrennungskraftmaschine, insbesondere den Verbrennungsmotor eines Kraftfahrzeugs, nach dem Oberbegriff des Anspruchs 1.

In der Mess- und Regelungstechnik werden sogenannte Luftmassenmesser (LMM, MAF) oder Luftmassensensoren (LMS) zur Bestimmung des Massestroms von Luft eingesetzt. Ein wichtiger Einsatzbereich derartiger Sensoren liegt auf dem Gebiet der Regelung von Verbrennungsprozessen, insbesondere in Verbrennungskraftmaschinen, welche maßgeblich von der molaren Menge zugeführten Luftsauerstoffs abhängen. Besonders in der Automobil-, Gasturbinen- und Brennwerttechnik kommen gattungsgemäße Luftmassenmesser daher häufig zum Einsatz.

Im Motormanagement werden derartige Messfühler dabei insbesondere genutzt, um - beispielsweise im Falle moderner Otto- oder Dieselmotoren - die in den Ansaugtrakt oder Brennraum des Motors einzuspritzende Kraftstoffmenge dem Volumenstrom der zugeführten Frischluft anzupassen. Unter dem Gesichtspunkt der Messgenauigkeit erweist sich hier vor allem die Beruhigung der angesaugten Luft für die folgende Messstrecke als kritische Anforderung. Der Stand der Technik umfasst aus diesem Grund beispielsweise sogenannte Karman-Vortex-Luftmassenmesser, welche eine gleichmäßige Strömungsgeschwindigkeit mittels eines an ihrem Eingang angeordneten Wabengitters anstreben.

Ein zeitlich besonders hochauflösendes Messsignal lässt sich nach dem Stand der Technik dagegen im Wege der thermischen Anemometrie mithilfe sogenannter Heißfilmluftmassenmesser (HFM) erzeugen, die bei Fahrzeug-Verbrennungsmotoren üblicherweise hinter einem etwaigen Luftfilter im Ansaugrohr angeordnet werden.

Aus der DE 102 30 430 A1 ist ein Filtermodul mit einem Filtergehäuse und einem darin angeordneten Filterkörper bekannt. Am Filtergehäuse schließt ein Luftstutzen an, in dem ein Vorschaltgitter angeordnet ist.

Die DE 20 2008 010 058 U1 zeigt ein Luftfiltersystem mit einem Filtergehäuse und einem darin angeordneten Filterkörper. In einem Luftkanalabschnitt des Systems ist ein Luftleitgitter angeordnet.

In der DE 196 50 806 A1 ist eine Luftführungsanlage beschrieben, die ein Gehäuse, einen Filterkörper sowie ein Luftführungsteil aufweist, in dem ein Strömungsgitter angeordnet ist.

Der Erfindung liegt daher die Aufgabe zugrunde, einen Filtermodul zu schaffen, der im Rahmen des Ansaugtrakts einer Verbrennungskraftmaschine zur Stabilisierung des Messsignals eines nachgelagerten Heißfilmluftmassenmessers beizutragen vermag. Die Erfindung stellt sich ferner der Aufgabe, eine auf entsprechende Weise verbesserte Verbrennungskraftmaschine, insbesondere in Gestalt eines Verbrennungsmotors für ein Kraftfahrzeug, bereitzustellen.

Diese Aufgaben werden durch ein Filtermodul mit den Merkmalen des Anspruchs 1 gelöst.

Die Erfindung fußt demnach auf dem Grundgedanken, am Luftfilter den als Anschluss an einen - stromabwärts des Luftfilters angeordneten - Reinluftkanal dienenden Reinluftstutzen um ein geeignetes Strömungsleitgitter zu ergänzen, welches der aus dem Luftfilter austretenden gereinigten Luft ein gleichmäßiges Strömungsfeld verleiht. Der solchermaßen homogenisierte Luftstrom kann mit reduzierten Verwirbelungen in den Reinluftkanal eintreten und einem darin angeordneten Luftmassenmesser zugeführt werden, welcher die Masse der den Reinluftkanal pro Zeiteinheit durchströmenden Luft auf diese Weise mit erhöhter Genauigkeit zu bestimmen vermag.

In einer besonders für die Kraftfahrzeugtechnik vorteilhaften Ausführungsform ist das Luftfilter dabei in Gestalt eines sogenannten Hufeisenfilters niedriger Bauhöhe ausgeführt, welches den durch die Vielzahl an Aggregaten äußerst beengten Platzverhältnissen im Motorraum moderner Kraftfahrzeuge gerecht wird. Rechnung trägt die Verwendung der besagten Hufeisenform ferner den Auflagen des Fußgängerschutzes, indem sie - trotz der konstruktiv meist erforderlichen Platzierung des Motorsteuergeräts auf dem Luftfiltergehäuse - die Einhaltung eines ausreichenden Mindestabstands zwischen Motorhaube und dem höchsten Punkt des Luftfiltergehäuses eines entsprechend ausgerüsteten Fahrzeugs erlaubt. Schließlich verleiht eine derartige Bauform dem Motorraum positive akustische Eigenschaften.

Erfindungsgemäß bilden Reinluftkanal und erfindungsgemäßes Luftfilter die Hauptbestandteile eines integrierten Filtermoduls, welches seinen Einsatz abermals als Baugruppe eines gattungsgemäßen Kraftwagens finden kann. In dieser Kombination empfiehlt sich eine gebogene Formgebung des Reinluftkanals, die von einer entsprechenden Biegung entlang des Kanals verlaufender Strömungsleitrippen in gleicher Weise unterstützt werden mag. Der somit realisierte Kurvenverlauf der Reinluftströmung wiederum gestattet die strömungstechnische Unterteilung des Kanals in kurveninnere und -äußere Bereiche unterschiedlicher Strömungsgeschwindigkeit. Die erwähnten Strömungsleitrippen, sofern diese den Kanal in dessen voller Höhe durchragen, unterstützen diese Trennung. Das besagte erste Strömungsleitgitter kann dabei

unmittelbar stromaufwärts eines bestimmten Kanalbereichs angeordnet und durch ein zusätzliches Gitter unterstützt werden.

Besagter Reinluftkanal nimmt dabei zugleich einen, insbesondere stromabwärts der beschriebenen Baugruppe angeordneten, Luftmassenmesser auf, wobei das thermische Wirkprinzip eines Hitzdrahtanemometers oder Heißfilmluftmassenmessers an dieser Stelle zahlreiche Vorzüge birgt. Insofern lässt das zeitlich hochauflösende Messsignal eines solchen Gebers mittels seines spezifischen Kennfeldes unter Einbeziehung weiterer Kenndaten der nachgelagerten Verbrennungskraftmaschine Rückschlüsse nicht nur auf den Massenstrom der Ansaugluft, sondern gleichfalls auf deren Temperatur und Feuchtigkeit zu. Im Anwendungsszenario eines Hubkolbenmotors erlauben diese Messgrößen eine präzise Bestimmung der pro Zylinderfüllung zur Verfügung stehenden molaren Luftsauerstoffmasse, um die lastabhängig optimale Menge des einzuspritzenden oder zuzumischenden Kraftstoffs zu ermitteln.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

### Es zeigen, jeweils schematisch

- Fig. 1: die perspektivische Ansicht eines erfindungsgemäßen Luftfilters und
- Fig. 2: die teilweise Ansicht eines das Luftfilter der Figur 1 umfassenden Filtermoduls.

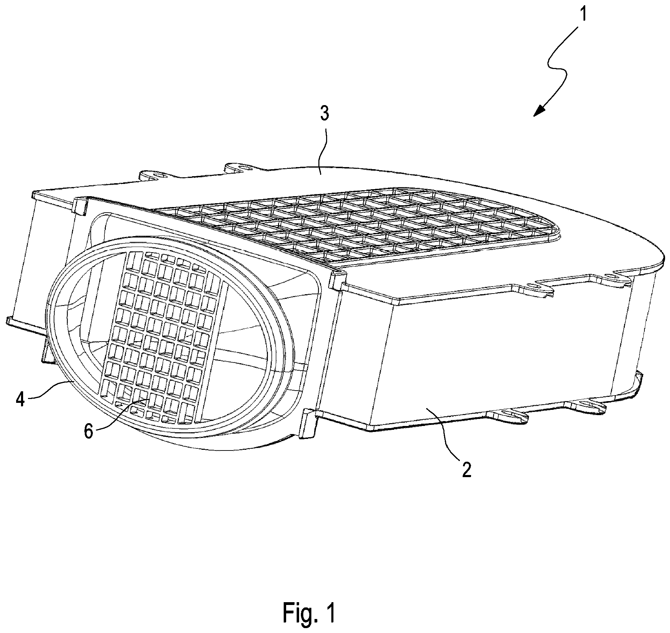

Die detaillierte Darstellung gemäß Figur 1 illustriert den prinzipiellen Aufbau eines Luftfilters 1. Als Luftfilter wird in diesem Zusammenhang grundsätzlich jedweder Abscheider betrachtet, welcher Aerosole oder andere unerwünschte Schwebstoffe wie Krankheitserreger, Pollen, Stäube oder Gase aus der Luft zu entfernen vermag.

In seiner vorliegenden Ausführungsform dient das Luftfilter 1 zur Reinigung der Ansaugluft des Otto- oder Dieselmotors eines Kraftfahrzeugs von im Luftstrom mitgerissenem Staub, Ruß und Reifenabrieb, um frühzeitigen Verschleiß an Ventilen, Zylinderlaufflächen, Kolbenringen, Gleitlagern und anderen Maschinenteilen sowie Störungen der Einspritzung des Motors zu verhindern. Die strukturelle Stabilität des Luftfilters 1 wird dabei mittels zweier Endscheiben 3 gewährleistet, welche mit Verstärkungsgittern versehen sind. Abhängig von ihrer erwarteten Flächenbelastung können weitere, in Figur 1 nicht erkennbare Stützkörper aus Metall oder Kunststoff zwischen den beiden Endscheiben 3 angeordnet sein.

Zwischen den im Wesentlichen flächenparallel angeordneten Endscheiben 3 befindet sich als Kernkomponente des Luftfilters 1 der luftdurchlässige Filterkörper 2 auf der Basis eines gefalteten Filtermediums. Das Filtermedium kann aus einer papierähnlichen Materialbahn mit Zelluloseanteilen oder einem synthetischen Faservlies gebildet sein, wie es in Fachkreisen gemeinhin als Trockenfilter bezeichnet wird. Eine Fügeverbindung zwischen Körper 2 und Gehäuse 3 wurde hierzu beispielsweise im Wege des Verschweißens, Einplastifizierens, Vulkanisierens oder Klebens hergestellt. Die in Figur 1 angedeutete Hufeisenform des Filterkörpers 2 erlaubt dabei einen Eintritt ungereinigter Außenluft im Wesentlichen über die gesamte, den Filterkörper 2 senkrecht zu den Gehäusedeckeln umlaufende Randfläche des Luftfilters 1.

An einer gemäß dem Blickwinkel der Figur 1 dem Betrachter zugewandten, der U- oder hufeisenförmigen Krümmung von Filterkörper 2 und Filtergehäuse 3 abgewandten Stirnseite des Luftfilters 1 ist schließlich, form- und kraftschlüssig gehalten durch das Filtergehäuse 3, der in eine Durchtrittsfläche mündende Reinluftstutzen 4 in Gestalt eines kurzen Ansatzrohrstücks angeordnet, dessen Konfiguration als erfindungswesentlich betrachtet werden mag. Die Durchtrittsfläche kann kreisförmig oder wie dargestellt oval ausgeführt sein. Insofern erstreckt sich ein erstes Strömungsleitgitter 6 diametral zwischen zwei Innenoberflächen des elliptischen Reinluftstutzens 4, ohne jedoch dessen gesamte Durchtrittsfläche zu bedecken.

Im Gegensatz zum durch die engste Stelle des Reinluftstutzens 4 definierten Strömungsquerschnitt besitzt das erste Strömungsleitgitter 6 dabei im Wesentlichen die Gestalt eines länglichen Rechtecks, welches sich gleichwohl entlang seiner kürzeren Ränder dem konvexen Verlauf des Reinluftstutzens 4 anschmiegt. Hinsichtlich der einzelnen Maschen des ersten Strömungsleitgitters 6 wurde vorliegend eine annähernd quadratische Form gewählt, was die Verwendung alternativer Geometrien - in Betracht käme beispielsweise eine wabenförmigen Struktur der Maschen des Strömungsleitgitters 6 - im Rahmen der Erfindung nicht ausschließt.

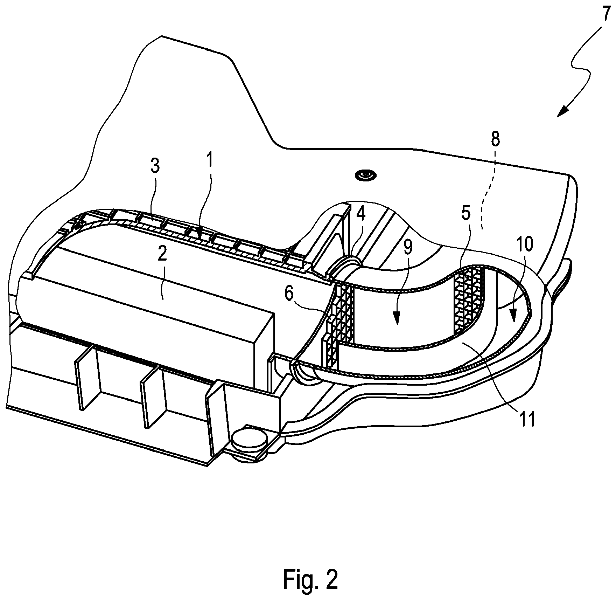

Das Wirkprinzip des Luftfilters 1 im Kontext eines übergeordneten Filtermoduls 7 verdeutlicht die Figur 2, welche sich aus Gründen der Übersichtlichkeit einer bereichsweisen Schnittdarstellung bedient. Erkennbar bleiben indes weiterhin Filterkörper 2, Reinluftstutzen 4 und Teile des ersten Strömungsleitgitters 6 des Luftfilters, der seitens seines Filterkörpers 2 nunmehr strömungstechnisch mit einer in Figur 2 nicht näher bezeichneten Ansaugöffnung des Filtermoduls 7 verbunden ist.

Besonderes Augenmerk verdient die gleichmäßig gebogene Formgebung des Reinluftkanals 9, 10, 11, welcher die durch das Luftfilter 1 filtrierte Luft dem Brennraum einer stromabwärts gelegenen, in Figur 2 nicht dargestellten Verbrennungskraftmaschine zuführt. Eine längs des Kanals 9, 10, 11 verlaufende Strömungsleitrippe 11 unterteilt seinen Strömungsquerschnitt dabei in einen (kurven-)inneren Bereich 9 sowie einen äußeren Bereich 10. Obgleich die schematisch vereinfachte Darstellung der Figur 2 diese Geometrie nicht widerspiegelt, durchmisst die Strömungsleitrippe 11 den Reinluftkanal 9, 10, 11 zu diesem Zweck in seiner gesamten Höhe, wobei das erste Strömungsleitgitter 6 unmittelbar stromaufwärts des inneren Bereichs 9 angeordnet und durch ein endseitig im inneren Bereich 9 befestigtes zweites Strömungsleitgitter 5 unterstützt wird. Der äußere Bereich 10 des Reinluftkanals 9, 10, 11 ist frei von Strömungsleitgittern gehalten und setzt der Luft somit nur einen geringen Widerstand entgegen, sodass der Luftdruck im Verlauf dieses äußeren Bereichs 10 nur unwesentlich abfällt.

In Figur 2 ist ferner zu erkennen, dass sich das erste Strömungsleitgitter 6 im Querschnitt über den gesamten inneren Bereich 9 erstreckt. Im gezeigten Beispiel überragt das erste Strömungsleitgitter 6 dem inneren Bereich 9 im Querschnitt und erstreckt sich über die Strömungsleitrippe 11 in den äußeren Bereich 10. Hierdurch wird der Entstehung von Ungleichmäßigkeiten, insbesondere von Turbulenzen, in der Strömung in den Randbereichen des inneren Bereichs 9 entgegengewirkt. Die Beruhigung der gereinigten Luft durch das erste Strömungsleitgitter 6 wird also verbessert. Hierbei erstreckt sich der äußere Bereich 10 im Querschnitt lediglich bereichsweise über den äußeren Bereich 10. Auch damit wird eine Verbesserung der Beruhigung der Luft erreicht.

Das Gehäuse des Filtermoduls weist zwei Gehäuseteile auf, welche miteinander verbunden sind und zumindest im Bereich des Reinluftkanals die Außengeometrie bilden. Die Verbindung der Gehäuseteile kann lösbar oder unlösbar ausgeführt sein. Insbesondere können die Gehäuseteile verschweißt, verschraubt oder verklippst sein. Ein ggf. zusätzlicher Gehäusedeckel (nicht dargestellt) kann eine Montageöffnung für das Filterelement offenbar verschließen, wenn die Gehäuseteile unlösbar miteinander verbunden sind. Die Strömungsleitrippe 11 kann an eines der Gehäuseteile angeformt sein und sich an dem gegenüberliegenden Gehäuseteil abstützen. Alternativ kann jeder der Gehäuseteile über einen Teil der Strömungsleitrippe verfügen. Die Strömungsleitrippenteile bilden dann gemeinsam die Strömungsleitrippe. Hierbei ist keine luftdichte Ausführung der Strömungsleitrippe erforderlich. Es sind auch Strömungsleitrippen mit einer minimalen Leckage denkbar.

Jenseits des zweiten Strömungsleitgitters 5 im inneren Bereich 9 befindet sich ein Luftmassenmesser 8, welcher - gemäß dem Wirkprinzip eines thermischen Anemometers - ein elektrisch beheiztes Sensorelement umfasst, dessen elektrischer Widerstand maßgeblich von seiner Umgebungstemperatur abhängt. Durch die Umströmung dieses Sensorelements findet eine Wärmeübertragung auf die aus dem Reinluftkanal 9, 10, 11 austretende filtrierte Luft statt, deren Betrag sich mit der Strömungsgeschwindigkeit verändert. Durch eine fortwährende Widerstandsmessung des Sensorelements des Luftmassenmessers 8 kann so auf die Strömungsgeschwindigkeit der aus dem Filtermodul 7 in Richtung der Verbrennungskraftmaschine geleiteten Luft geschlossen werden. Das Sensorelement ist vorliegend in Form eines Films ausgebildet, sodass der Luftmassenmesser 8 der Bauart des sogenannten Heißfilmluftmassenmessers zuzurechnen ist.

## Patentansprüche

1. Filtermodul (7) für eine Verbrennungskraftmaschine, insbesondere einen Verbrennungsmotor,
- mit einer Ansaugöffnung zum Ansaugen von Luft,
- mit mindestens einem fluidisch mit der Ansaugöffnung verbundenen Luftfilter (1)
- wobei der Luftfilter (1) einen luftdurchlässigen Filterkörper (2) zum Reinigen von Luft aufweist,
- wobei der Luftfilter (1) ein Filtergehäuse (3) zum Aufnehmen des Filterkörpers (2) aufweist,
- wobei der Luftfilter (1) einen fluidisch mit dem Filterkörper (2) und mechanisch mit dem Filtergehäuse (3) verbundenen Reinluftstutzen (4) aufweist,
- wobei der Luftfilter (1) ein innerhalb des Reinluftstutzens (4) angeordnetes erstes Strömungsleitgitter (6) zum Beruhigen der gereinigten Luft aufweist.
- mit einem fluidisch mit dem Luftfilter (1) verbundenen, vorzugsweise gebogenen Reinluftkanal (9, 10, 11) zum Einleiten der filtrierten Luft in einen Brennraum der Verbrennungskraftmaschine,
- wobei der Reinluftstutzen (4) am Reinluftkanal (9, 10, 11) angeschlossen ist,
- mit einem in dem Reinluftkanal (9, 10, 11) angeordneten Luftmassenmesser (8), insbesondere einen Heißfilmluftmassenmesser, zum Messen eines Massenstroms der filtrierten Luft,
**dadurch gekennzeichnet, dass**
- der Reinluftkanal (9, 10, 11) stromaufwärts des Luftmassenmessers (8) einen inneren Bereich (9), einen äußeren Bereich (10) und mindestens eine längs des Reinluftkanals (9, 10, 11) zwischen dem inneren Bereich (9) und dem äußeren Bereich (10) verlaufende Strömungsleitrippe (11) zum Trennen der Bereiche (9, 10) aufweist,
- die Strömungsleitrippe (11) den Reinluftkanal (9, 10, 11) im Querschnitt diametral durchragt.

2. Filtermodul nach Anspruch 1,
**dadurch gekennzeichnet, dass**
das erste Strömungsleitgitter (6) eine Durchtrittsfläche des Reinluftstutzens (4) nur teilweise bedeckt.

3. Filtermodul nach Anspruch 2,
**dadurch gekennzeichnet, dass**
die Durchtrittsfläche eine ovale Stimfläche des Reinluftstutzens (4) ist und das erste Strömungsleitgitter (6) eine vorzugsweise mittige, im Wesentlichen rechteckige Teilfläche der Stimfläche bedeckt.

4. Filtermodul nach einem der Ansprüche 1 bis 3,
**dadurch gekennzeichnet, dass**
der Filterkörper (3) zylindrisch, platten- oder hufeisenförmig ist.

5. Filtermodul nach einem der Ansprüche 1 bis 4,
**dadurch gekennzeichnet, dass**
das erste Strömungsleitgitter (6) unmittelbar stromaufwärts des inneren Bereichs (9) angeordnet ist.

6. Filtermodul nach einem der Ansprüche 1 bis 5,
**gekennzeichnet durch**
ein innerhalb des inneren Bereichs (9) unmittelbar stromaufwärts des Luftmassenmessers (8) angeordnetes zweites Strömungsleitgitter (5).

7. Filtermodul nach einem der Ansprüche 1 bis 8,
**dadurch gekennzeichnet, dass**
sich das erste Strömungsleitgitter (6) im Querschnitt über den gesamten inneren Bereich (9) erstreckt.

8. Filtermodul nach einem der Ansprüche 1 bis 7,
**dadurch gekennzeichnet, dass**
das erste Strömungsleitgitter (6) den inneren Bereich (9) im Querschnitt überragt.

9. Filtermodul nach einem der Ansprüche 1 bis 8,
**dadurch gekennzeichnet, dass**
sich das erste Strömungsleitgitter (6) im Querschnitt lediglich teilweise über den äußeren Bereich (10) erstreckt.

## Claims

1. Filter module (7) for a combustion engine, in particular an internal combustion engine,
- having a suction opening for suctioning air,
- having at least one air filter (1) fluidly connected to the suction opening
- wherein the air filter (1) has an air-permeable filter body (2) for cleaning air,
- wherein the air filter (1) has a filter housing (3) for receiving the filter body (2),
- wherein the air filter (1) has a clean air connecting piece (4) fluidly connected to the filter body (2) and mechanically connected to the filter housing (3),
- wherein the air filter (1) has a first flow guiding grid (6) arranged within the clean air connecting piece (4) for calming the cleaned air.
- having a, preferably bent, clean air channel (9, 10, 11) fluidly connected to the air filter (1) for introducing the filtered air into a combustion chamber of the combustion engine,
- wherein the clean air connecting piece (4) is connected to the clean air channel (9, 10, 11),
- having an air flow metre (8) arranged in the clean air channel (9, 10, 11), in particular a hot film air flow metre, for measuring an air flow of the filtered air, **characterised in that**
- the clean air channel (9, 10, 11) has, upstream of the air flow metre (8), an inner region (9), an outer region (10) and at least one flow guiding rib (11) running along the clean air channel (9, 10, 11) between the inner region (9) and the outer region (10) for separating the regions (9, 10),
- the flow guiding rib (11) passes through the clean air channel (9, 10, 11) diametrically in cross-section.

2. Filter module according to claim 1,
**characterised in that**
the first flow guiding grid (6) only partially covers a passage area of the clean air connecting piece (4).

3. Filter module according to claim 2,
**characterised in that**
the passage area is an oval front area of the clean air connecting piece (4) and the first flow guiding grid (6) covers a preferably central, substantially rectangular partial area of the front area.

4. Filter module according to any one of claims 1 to 3,
**characterised in**
**that** the filter body (3) is cylindrical, plate-shaped or horseshoe-shaped.

5. Filter module according to any one of claims 1 to 4,
**characterised in that**
the first flow guiding grid (6) is arranged directly upstream of the inner region (9).

6. Filter module according to any one of claims 1 to 5,
**characterised by**
a second flow guiding grid (5) arranged within the inner region (9) directly upstream of the air flow metre (8).

7. Filter module according to any one of claims 1 to 8,
**characterised in that**
the first flow guiding grid (6) extends over the entire inner region (9) in cross-section.

8. Filter module according to any one of claims 1 to 7,
**characterised in that**
the first flow guiding grid (6) projects beyond the inner region (9) in cross-section.

9. Filter module according to any one of claims 1 to 8,
**characterised in that**
the first flow guiding grid (6) extends only partially over the outer region (10) in cross-section.

## Revendications

1. Module de filtre (7) pour une machine à combustion interne, en particulier un moteur à combustion interne,
- avec une ouverture d'aspiration pour l'aspiration d'air,
- avec au moins un filtre à air (1) raccordé fluidiquement à l'ouverture d'aspiration,
- dans lequel le filtre à air (1) présente un corps de filtre (2) perméable à l'air pour le nettoyage de l'air,
- dans lequel le filtre à air (1) présente un boîtier de filtre (3) pour la réception du corps de filtre (2),
- dans lequel le filtre à air (1) présente une tubulure d'air pur (4) raccordée fluidiquement au corps de filtre (2) et mécaniquement au boîtier de filtre (3),
- dans lequel le filtre à air (1) présente une première grille de conduction d'écoulement (6) disposée dans la tubulure d'air pur (4) pour l'apaisement de l'air nettoyé.
- avec un canal d'air pur (9, 10, 11), plié de préférence, raccordé fluidiquement au filtre à air (1) pour l'introduction de l'air filtré dans un espace de combustion de la machine à combustion interne,
- dans lequel la tubulure d'air pur (4) est connectée au canal d'air pur (9, 10, 11),
- avec un débitmètre massique (8) disposé dans le canal d'air pur (9, 10, 11), en particulier un débitmètre massique à film chaud, pour la mesure d'un débit massique de l'air filtré,
**caractérisé en ce que**
- le canal d'air pur (9, 10, 11) présente en amont du débitmètre massique (8) une zone intérieure (9), une zone extérieure (10) et au moins une nervure de conduction d'écoulement (11) s'étendant le long du canal d'air pur (9, 10, 11) entre la zone intérieure (9) et la zone extérieure (10) pour la séparation des zones (9, 10),
- la nervure de conduction d'écoulement (11) traverse diamétralement le canal d'air pur (9, 10, 11) en section transversale.

2. Module de filtre selon la revendication 1,
**caractérisé en ce que**
la première grille de conduction d'écoulement (6) ne recouvre que partiellement une surface de passage de la tubulure d'air pur (4).

3. Module de filtre selon la revendication 2,
**caractérisé en ce que**
la surface de passage est une surface avant ovale de la tubulure d'air pur (4) et la première grille de conduction d'écoulement (6) recouvre une surface partielle, de préférence médiane, sensiblement rectangulaire de la surface avant.

4. Module de filtre selon l'une quelconque des revendications 1 à 3,
**caractérisé en ce que**
le corps de filtre (3) est en forme de cylindre, de plaque ou de fer à cheval.

5. Module de filtre selon l'une quelconque des revendications 1 à 4,
**caractérisé en ce que**
la première grille de conduction d'écoulement (6) est directement disposée en amont de la zone intérieure (9).

6. Module de filtre selon l'une quelconque des revendications 1 à 5,
**caractérisé par**
une seconde grille de conduction d'écoulement (5) disposée dans la zone intérieure (9) directement en amont du débitmètre massique (8).

7. Module de filtre selon l'une quelconque des revendications 1 à 8,
**caractérisé en ce que**
la première grille de conduction d'écoulement (6) s'étend en section transversale sur la zone intérieure (9) entière.

8. Module de filtre selon l'une quelconque des revendications 1 à 7,
**caractérisé en ce que**
la première grille de conduction d'écoulement (6) dépasse en section transversale de la zone intérieure (9).

9. Module de filtre selon l'une quelconque des revendications 1 à 8,
**caractérisé en ce que**
la première grille de conduction d'écoulement (6) s'étend en section transversale juste partiellement sur la zone extérieure (10).
